Europäisches Patentamt

**European Patent Office**

Office européen des brevets

(11) Numéro de publication: **0 329 564**
**A1**

## DEMANDE DE BREVET EUROPEEN

(21) Numéro de dépôt: **89400455.5**

(22) Date de dépôt: **17.02.89**

(51) Int. Cl.⁴: **F 16 J 15/32**

(30) Priorité: **18.02.88 FR 8801929**

(43) Date de publication de la demande:
**23.08.89 Bulletin 89/34**

(84) Etats contractants désignés: **DE ES GB IT**

(71) Demandeur: **PROCAL, Société anonyme dite
Les Franchises
F-52200 Langres (FR)**

(72) Inventeur: **Saxod, Michel
Bourg
F-52200 Langres (FR)**

**Fougerolle, Fabrice
Montlandon
F-52600 Chalindrey (FR)**

(74) Mandataire: **Leszczynski, André et al
CABINET NONY & CIE. 29 rue Cambacérès
F-75008 Paris (FR)**

(54) **Bagues d'étanchéité de type radial à lèvre d'étanchéité en résine fluorée.**

(57) L'invention est relative à une bague d'étanchéité de type radial comportant une armature, un corps, notamment en élastomère, et une lèvre d'étanchéité constituée par une rondelle annulaire, en résine fluorée telle que du PTFE, adhérisée le long d'une zone annulaire périphérique externe par unede ses faces sur une portée supérieure du corps.

Ladite rondelle (8) est soumise à un traitement par attaque chimique visant à réduire ses propriétés anti-adhésives uniquement sur une zone périphérique annulaire externe (9), l'étendue radiale de ladite zone externe (9) correspondant à l'étendue radiale de la portée supérieure (6) du corps en élastomère (5) de la bague (1) sur laquelle est adhérisée la lèvre d'étanchéité.

Fig. 1

**Description**

### Bagues d'étanchéité de type radial à lèvre d'étanchéité en résine fluorée.

La présente invention est relative aux bagues d'étanchéité de type radial et plus précisément à de telles bagues comportant une armature, un corps, notamment en élastomère, et une lèvre d'étanchéité en matériau à faible frottement, notamment en résine fluorée, telle qu'en particulier le polytétrafluoréthylène (PTFE) chargé ou non, adhérisée sur ledit corps et saillant radialement vers l'intérieur depuis celui-ci.

De telles bagues peuvent également comprendre une lèvre secondaire, antipoussière, réalisée dans le même matériau que le corps et prolongeant celui-ci, ainsi qu'un revêtement du même matériau sur la portée de l'armature en appui sur la portée de l'alésage dans lequel est mise en place la bague.

Un exemple de réalisation de telles bagues et un procédé de fabrication de celles-ci par moulage par injection du corps en élastomère sont décrits dans la demande de brevet français 85 11007 de la société déposante.

Dans de telles bagues d'étanchéité la lèvre d'étanchéité est constituée par une rondelle annulaire, en résine fluorée telle que du PTFE, adhérisée le long d'une zone annulaire périphérique externe par une de ses faces sur une portée supérieure du corps.

La rondelle en résine fluorée, notamment en PTFE, est, dans la pratique, avant sa mise en place dans le moule pour la réalisation de la bague, traitée par attaque chimique, de manière connue par exemple par la demande de brevet allemand 33 29 386, pour accroître son aptitude à l'adhésion, puis en général encollée sur la face de sa zone annulaire périphérique externe destinée à être adhérisée au corps en élastomère.

Le traitement visant à diminuer les propriétés anti-adhésives du PTFE consiste à éliminer par voie chimique les atomes de fluor présents dans les chaînes des couches superficielles et qui d'ordinaire confèrent au PTFE des propriétés anti-adhésives utilisées dans d'autres applications.

A cet effet, les rondelles annulaires de PTFE destinées à réaliser la lèvre d'étanchéité, au préalable préformées ou usinées à la forme voulue, notamment pour présenter une surépaisseur d'extrémité et/ou les moyens de pompage hydrodynamique, notamment les stries d'orientation, souhaités, sont immergées dans un bain de traitement, notamment sodium/ammoniac, pendant quelques secondes, puis lavées, rincées et séchées.

Ainsi la totalité de la rondelle se trouve traitée, en particulier sa partie annulaire radialement interne destinée à former la portée active d'étanchéité sur l'arbre.

Or, des essais effectués par la société déposante ont montré que la transformation de topographie de surface de la rondelle provoquée notamment au niveau de la portée active de la lèvre d'étanchéité lors du traitement d'attaque chimique anti-adhésion avait des conséquences dommageables sur la qualité et la fiabilité de la lèvre d'étanchéité, en particulier dans sa zone d'étanchéité dynamique, entraînant une détérioration de celle-ci.

La présente invention a notamment pour but d'éviter cet inconvénient.

A cet effet, selon l'invention, la rondelle en résine fluorée, notamment en PTFE, formant la lèvre d'étanchéité est soumise à un traitement par attaque chimique visant à réduire ses propriétés anti-adhésives uniquement sur une zone périphérique annulaire externe, l'étendue radiale de ladite zone externe correspondant à l'étendue radiale de la portée supérieure du corps en élastomère de la bague sur laquelle est adhérisée la lèvre d'étanchéité.

De préférence, l'étendue radiale de la zone annulaire de la rondelle annulaire traitée par attaque chimique est comprise entre 20 et 60% de largeur radiale de ladite rondelle.

Le traitement par attaque chimique peut être effectué uniquement sur la face de la rondelle en regard du corps en élastomère ou sur les deux faces de celle-ci.

Le fait de traiter la face de la rondelle opposée à celle adhérisée au corps en élastomère, et ce uniquement sur une zone annulaire périphérique externe de la rondelle ne participant pas à la fonction d'étanchéité de la lèvre au contact de l'arbre, ne s'est en effet pas révélé dommageable pour le fonctionnement de la bague.

Les opérations de traitement d'attaque chimique peuvent être effectuées par tout moyen approprié permettant de réaliser une attaque chimique sélective dans la zone spécifiée à l'exclusion du reste de la rondelle.

A cet effet, on peut citer les techniques conventionnelles de sérigraphie ou d'application au tampon ou encore le dépôt par centrifugation.

Pour des raisons économiques de cadences de production, il est proposé selon l'invention de réaliser l'attaque chimique en immergeant dans un bain d'une solution appropriée, notamment sodium/ammoniac, un ensemble comportant un empilement de rondelles enfilées sur un arbre central, lesdites rondelles étant séparées par des éléments d'espacement annulaires, également enfilés sur l'arbre central, et bloqués, lesdits éléments étant d'un diamètre correspondant au diamètre de la zone de la rondelle destinée à être protégée de l'attaque chimique.

Après immersion de l'ensemble ainsi constitué dans lequel seules les zones à traiter des rondelles sont au contact de la solution d'attaque chimique, on retire l'ensemble et on procède à des opérations conventionnelles de lavage, rinçage et séchage des rondelles en vue de la réalisation ultérieure des bagues.

Dans le but de mieux faire comprendre l'invention on va maintenant en décrire à titre d'exemple en aucune manière limitatif un mode de réalisation en se référant au dessin annexé dans lequel :

- la figure 1 représente en demi-coupe une bague selon l'invention,

- la figure 2 est une vue de dessous d'une rondelle constituant la lèvre d'étanchéité de la bague selon l'invention, et

- la figure 3 illustre schématiquement en coupe un exemple de mise en oeuvre de procédé de traitement d'attaque chimique pour réaliser la rondelle illustrée à la figure 2.

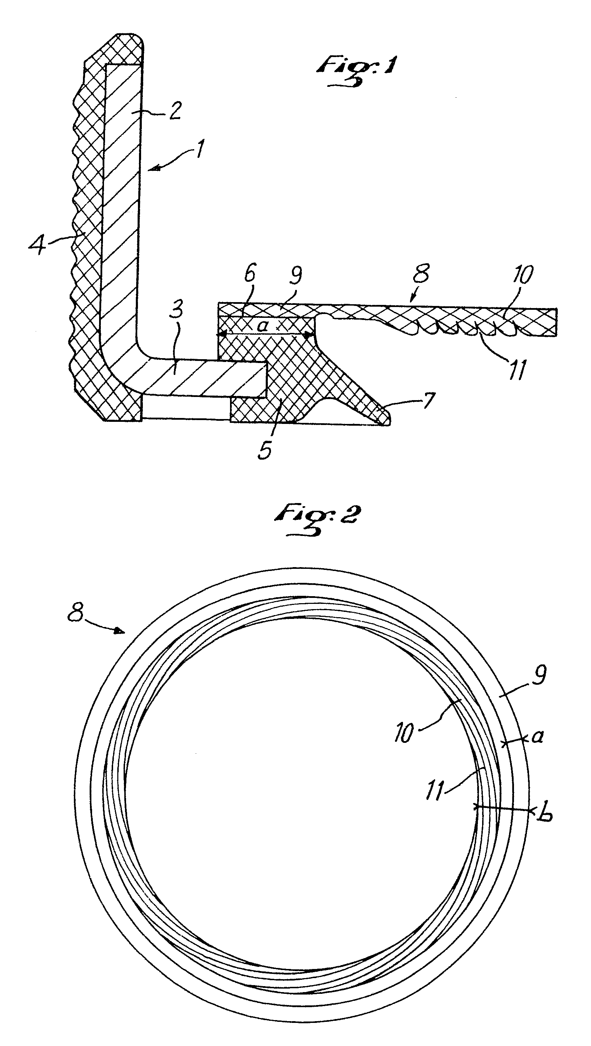

La bague selon l'invention illustrée à la figure 1 est du même type que celle décrite dans la demande de brevet français 85 11007 de la société déposante.

La bague comporte une armature annulaire métallique 1, présentant une branche longue 2 destinée à venir en appui contre le paroi de l'alésage (non représenté), dans lequel est montée la bague et une branche radiale plus courte 3. Sur la branche longue 2 de l'armature est adhérisé de manière conventionnelle un revêtement en élastomère 4 constituant la portée extérieure de la bague.

Sur la branche 3 de l'armature 1 est adhérisé un corps en élastomère 5 présentant une portée supérieure plane 6 d'étendue radiale a.

Le corps 5 comporte également un prolongement 7 d'un seul tenant constituant une lèvre secondaire antipoussière.

La bague comporte une lèvre d'étanchéité constituée par une rondelle annulaire en résine fluorée telle que de PTFE 8, adhérisée par une zone annulaire périphérique externe 9 d'une étendue radiale a, sur la portée supérieure 6 du corps, la lèvre d'étanchéité se prolongeant au-delà du corps 7 et présentant une portée active d'étanchéité, radialement interne 10, sous forme de surépaisseur dans l'exemple illustré et comportant dans la face destinée à venir au contact de l'arbre (non représenté) des stries d'orientation 11 aptes à réaliser un effet de pompage hydrodynamique.

Selon l'invention, la rondelle 8 est soumise à un traitement d'attaque chimique en vue de réduire ses propriétés anti-adhésives uniquement sur la zone périphérique annulaire 9 d'étendue radiale a et non pas sur toute la surface de la rondelle et en particulier pas dans la partie active d'étanchéité 10.

Dans un exemple de réalisation, une rondelle d'un diamètre extérieur de 98 mm en PTFE, d'une largeur radiale b de 11 mm a été traitée sur une zone d'étendue radiale a de 4 mm.

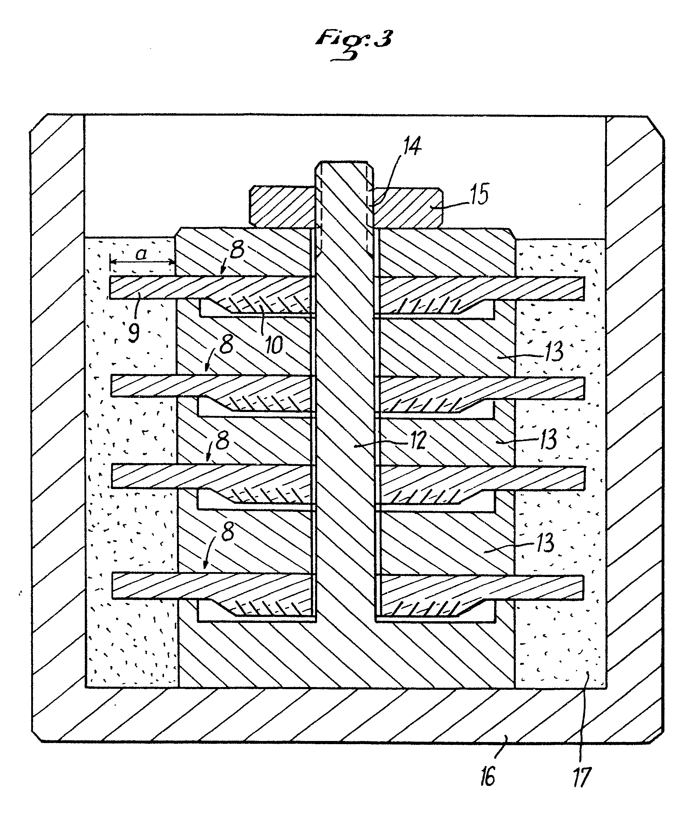

Le traitement a été effectué sur les deux faces de la rondelle dans la zone annulaire externe 9 d'étendue radiale a en mettant en oeuvre le dispositif illustré à la figure 3 dans lequel les rondelles sont empilées sur un arbre central 12 avec interposition d'éléments annulaires d'espacement 13 également enfilés sur l'arbre 12 et aptes à masquer les surfaces des rondelles à l'exception de surfaces des zones annulaires périphériques externes 9. L'arbre 12 comporte à son extrémité une partie filetée 14 sur laquelle est serré un écrou de blocage 15.

L'assemblage ainsi réalisé est mis en place dans une cuve 16 contenant un liquide de traitement d'attaque chimique 17 dans lequel ne plongent que les parties 9 des rondelles.

Après immersion pendant un temps de l'ordre de quelques secondes, les rondelles 8 sont retirées de la cuve, lavées, rincées et séchées.

L'opération ultérieure de moulage en vue de réaliser la bague peut avantageusement s'effectuer en mettant en oeuvre le procédé décrit dans la demande de brevet français précitée 85 11007, après encollage éventuel des rondelles sur la face de leur zone annulaire périphérique externe devant être adhérisée au corps en élastomère.

D'autres procédés de fabrication, notamment de moulage par compression du corps en élastomère, peuvent également être mis en oeuvre en utilisant une rondelle en résine fluorée, traitée comme spécifié dans la présente demande.

Bien que l'invention ait été décrite en liaison avec un mode de réalisation particulier, il est bien évident qu'elle n'y est nullement limitée et qu'on peut lui apporter différentes variantes et modifications sans pour autant sortir ni de son cadre ni de son esprit.

## Revendications

1. Bague d'étanchéité de type radial comportant une armature, un corps, notamment en élastomère, et une lèvre d'étanchéité constituée par une rondelle annulaire, en résine fluorée telle que du PTFE, adhérisée le long d'une zone annulaire périphérique externe par une de ses faces sur une portée supérieure du corps, caractérisée par le fait que ladite rondelle (8) est soumise à un traitement par attaque chimique visant à réduire ses propriétés anti-adhésives uniquement sur une zone périphérique annulaire externe (9), l'étendue radiale (a) de ladite zone externe (9) correspondant à l'étendue radiale de la portée supérieure (6) du corps en élastomère (5) de la bague (1) sur laquelle est adhérisée la lèvre d'étanchéité.

2. Bague selon la revendication 1, caractérisée par le fait que l'étendue radiale (a) de la zone annulaire (9) de la rondelle (8) traitée par attaque chimique est comprise entre 20 et 80% de la largeur radiale (b) de ladite rondelle (8).

3. Bague selon l'une quelconque des revendications 1 et 2, caractérisée par le fait que le traitement par attaque chimique dans ladite zone périphérique annulaire externe (9) est effectué uniquement sur la face de la rondelle en regard du corps en élastomère (5).

4. Bague selon l'une quelconque des revendications 1 et 2, caractérisée par le fait que le traitement par attaque chimique est effectué sur les deux faces de la rondelle dans ladite zone périphérique annulaire externe (9) de celle-ci.

Fig:1

Fig:2

Fig:3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | EP-A-0 213 998  (PROCAL)<br>* Figure 1; page 3, lignes 26-32 *<br>--- | 1-4 | F 16 J   15/32 |
| A | FR-A-1 315 747  (ASS. ELECTRICAL IND.)<br>* Page 1, colonne de gauche, lignes 15-23 *<br>--- | 1,3 | |
| A | FR-A-1 206 054  (MONTECATINI)<br>* Page 4, paragraphe 8 du résumé *<br>----- | 1,3-4 | |

DOMAINES TECHNIQUES RECHERCHES (Int. Cl.4)

F 16 J
C 08 J

Le présent rapport a été établi pour toutes les revendications

| Lieu de la recherche | Date d'achèvement de la recherche | Examinateur |
|---|---|---|
| LA HAYE | 22-05-1989 | NARMINIO A. |